# EUROPÄISCHE PATENTSCHRIFT

(11) **EP 2 186 261 B1**
(45) Veröffentlichungstag und Bekanntmachung des Hinweises auf die Patenterteilung: **14.09.2016**
(21) Anmeldenummer: 08775301.8
(22) Anmeldetag: 23.07.2008
(51) Int. Cl.: H04M 3/16, H04M 7/00, H04N 7/14, H04N 7/167, H04N 7/173, H04N 17/00, H04N 21/434, H04N 21/435, H04N 21/4385, H04N 21/6334, H04N 21/4405, H04N 21/4788, H04L 29/06, H04L 12/26, H04N 21/6437

(54) **VERFAHREN UND KOMMUNIKATIONSANORDNUNG ZUM ANALYSIEREN VON GLEICHZEITIG ÜBERTRAGENEN, VERSCHLÜSSELTEN DATENSTRÖMEN**
METHOD AND COMMUNICATION SYSTEM FOR ANALYZING SIMULTANEOUSLY TRANSMITTED, ENCODED DATA STREAMS
PROCÉDÉ ET SYSTEME DE COMMUNICATION POUR ANALYSER DES FLUX DE DONNÉES TRANSMIS SIMULTANÉMENT ET CODÉS

(30) Priorität: 30.08.2007 DE 102007041145
(43) Veröffentlichungstag der Anmeldung: 19.05.2010
(73) Patentinhaber: Unify GmbH & Co. KG, 81379 München (DE)
(72) Erfinder: HARTMANN, Siegfried, 85402 Kranzberg (DE); KRUMBÖCK, Jörg, 10823 Berlin (DE)
(74) Vertreter: Fritzsche, Thomas
(86) Internationale Anmeldenummer: PCT/EP2008/059631
(87) Internationale Veröffentlichungsnummer: WO 2009/027157

(56) Entgegenhaltungen:
- EP-A- 1 195 968
- WO-A-2005/091549
- US-A1- 2003 200 176
- US-A1- 2005 135 419
- BAUGHER D MCGREW CISCO SYSTEMS M ET AL: "The Secure Real-time Transport Protocol (SRTP)" 20040301; 20040300, 1. März 2004 (2004-03-01), XP015009491 in der Anmeldung erwähnt
- HUAWEI TECHNOLOGIES: "Security Consideration of IPTV Intermediate Devices" ITU CONTRIBUTION, [Online] Mai 2007 (2007-05), Seiten 1-5, XP002498491 Gefunden im Internet: URL:http://ties.itu.int/ftp/public/itu-t/f giptv/readonly/Previous_Meetings/20070507_ Bled-Slovenia/Contributions/FG%20IPTV-C-04 91e.doc> [gefunden am 2008-10-06]
- WING CISCO SYSTEMS F AUDET NORTEL S FRIES SIEMENS AG H TSCHOFENIG NOKIA SIEMENS NETWORKS D: "Disclosing Secure RTP (SRTP) Session Keys with a SIP Event Package; draft-wing-sipping-srtp-key-02.txt", 20071115, no. 2, 15 November 2007 (2007-11-15), XP015054771, ISSN: 0000-0004
- ANDREASEN M BAUGHER D WING CISCO SYSTEMS F: "Session Description Protocol (SDP) Security Descriptions for Media Streams; rfc4568.txt", 20060701, 1 July 2006 (2006-07-01), XP015055005, ISSN: 0000-0003
- WING CISCO SYSTEMS F AUDET NORTEL S FRIES SIEMENS AG H TSCHOFENIG NOKIA SIEMENS NETWORKS D: "Disclosing Secure RTP (SRTP) Session Keys with a SIP Event Package; draft-wing-sipping-srtp-key-01.txt", 20070708, no. 1, 8 July 2007 (2007-07-08), XP015052335, ISSN: 0000-0004

## Beschreibung

In Kommunikationsnetzen, insbesondere in Voice over IP Kommunikationsnetzen, ist für die Übertragung der durch Datenpakete gebildeten Datenströme bzw. Multimediadatenströme, d.h. der Nutzinformation bzw. der Sprachinformation, häufig das RTP- Protokoll (Real Time Protocol) vorgesehen. Das RTP- Protokoll ist im RFC Standard 1889 bzw. seit 2003 im RFC Standard 3550 definiert. Aufgrund gestiegener Sicherheitsbedürfnisse werden die Datenströme seit geraumer Zeit verschlüsselt übertragen, wobei dieses gesicherte RTP- Protokoll im RFC-Standard 3711 beschrieben ist. Die für die Verschlüsselung erforderliche Schlüsselinformation wird hierbei datenstromindividuell zugeordnet bzw. verwendet. Beispielsweise werden bei einer Multimedia- Session zwischen zwei Endpunkten in einem IP- basierten Kommunikationsnetz in jeweils einer Übertragungsrichtung ein Audio- und ein Videodatenstrom übertragen. Bezogen auf beide Übertragungsrichtungen werden innerhalb einer Multimediasession vier Datenströme übertragen, die jeweils separat verschlüsselt, d.h. datenstromindividuell verschlüsselt sind. Die Schlüsselinformation wird der jeweiligen Session bzw. zum jeweiligen Datenstrom während der Verbindungssignalisierung - beispielsweise dem SIP- Protokoll (Session Initiation Protocol) - zugeordnet bzw. ausgehandelt, wobei für die Verschlüsselung der Verbindungssignalisierung spezielle Schlüssel - beispielsweise Preshared Secrets - verwendet werden, die auch durch ein Mitlesen des Datenstroms nicht erkannt werden können.

In HUAWEI TECHNOLOGIES: "Security Consideration of IPTV Intermediate Devices" ITU CONTRIBUTION, Mai 2007 (2007-05), Seiten 1-5, XP002498491, ist beschrieben, dass viele zwischengeschaltete Geräte in einem System zur Verteilung von IPTV-Inhalten vorkommen, die möglichen Netzwerk-Hacker-Angriffen ausgesetzt sein können und zu der Schwachstelle des IPTV-Systems werden können. Zwischengeschaltete Geräte werden als "Überwachungssonden" bezeichnet, wobei Sicherheitsgefahren für die Überwachungssonden und Sicherheitslösungen zu ihrem Schutz diskutiert werden.

In WO 2005/091549 A1 ist ein Verfahren zur effektiven Übertragung von Verschlüsselungsinformation in einem sicheren Echtzeitprotokoll beschrieben. Ein Übertragungsendgerät kann zur Verschlüsselung von Daten mit einem Sitzungsschlüssel verwendet werden, der von einem Bitstrom abgeleitet wird. Um Bandbreite einzusparen, kann die Information in Abschnitte geteilt sein. In US 2003/0200176 A1 ist ein Verfahren beschrieben, bei dem eine Anbindung eines Titelschlüssels zu einem verschlüsselten Inhalt für eine synchronisierte Übertragung zu oder für eine Speicherung bei einem Empfänger bereitgestellt wird. Auch bei diesem Verfahren wird ein elementarer Medienstrom in Inhaltseinheiten eingeteilt.

In US 2005/0135419 A1 ist ein Verfahren beschrieben, bei dem eine abwärts synchrone Mehrkanalkommunikation (DSSM: Downstream Synchronous Multichannel) bereitgestellt wird unter einer Mehrzahl von Einheiten, von denen jede eine vollständig DOCSIS™ 2.0 fähige Folgeeinheit ist. Nicht-DSSM Pakete werden auf einem einzelnen Kanal übertragen. DSSM Pakete werden in vielfache Stücke geteilt, die gleichzeitig auf allen verfügbaren Kanälen übertragen werden.

In EP 1 195 968 A2 ist ein Verfahren zur sicheren Übertragung gestreamter Medien beschrieben, bei dem jedes Paket des Datenstroms mit einem Paketschlüssel unter Verwendung eines schnellen Verschlüsselungsalgorithmus verschlüsselt ist.

ANDREASEN M BAUGHER D WING CISCO SYSTEMS F: "Session Description Protocol (SDP) Security Descriptions for Media Streams; rfc4568.txt", 20060701, 1. Juli 2006 (2006-07-01), XP015055005, ISSN: 0000-0003, betrifft ein sicheres, Realzeit-Übertragungsprotokoll (SMTP) und spezifiziert ein Übertragungsprotokoll nach Internetstandard für die Internetgemeinschaft. Es werden ein sicheres Realzeitübertragungsprotokoll (RTP) und ein Profil für das Realzeitübertragungsprotokoll bereitgestellt, wobei die Vertraulichkeit, eine Authentifizierung der Nachrichten, ein Wiedergabeschutz für den Verkehr nach dem Realzeitübertragungsprotokoll, der Kontrollverkehr für das Realzeittransportprotokoll, nämlich das Realzeittransport-Kontrollprotokoll diskutiert.

WING CISCO SYSTEMS F AUDET NORTEL S FREIUS SIEMENS AG H TSCHOFENOG NOKIA SIEMENS NETWORKS D: "Disclosing Secure RTP (SRTP) Session Keys with a SIP Event Package; draft-wing-siping-srtp-key-1.txt", 20070708, Nr- 1, 8. Juli 2007 (2007-07-08), XP015052335, ISSN: 0000-0004 offenbart ein Verfahren zum Entschlüsseln von mindestens einem verschlüsselte Datenpakete aufweisenden Datenstrom, wobei der Datenstrom nach einem Netzwerkprotokoll zum Verschlüsseln und Übertragen von Datenströmen datenstromindividuell gebildet und Datenstrom individuell verschlüsselt ist und im Netzwerkprotokoll für die Verschlüsselungspakete eine Information über den Datenpakettyp angegeben wird, wobei in den jeweils gebildeten, verschlüsselten Strom als Schlüsseldatenpakete gebildete Datenpakete eingefügt werden. Mithilfe der datenstromindividuellen Schlüsselinformation wird der Datenstrom entschlüsselt.

In Kommunikationsnetzen werden meist mehrere Datenströme bzw. Multimediadatenströme über eine Übertragungsstrecke bzw. einen Übertragungsabschnitt übertragen. Für die in Kommunikationsnetzen auftretenden Problemsituationen ist eine Analyse bzw. der Diagnose der übertragenen Datenströme zur Lokalisierung bzw. Eingrenzung von Fehlern unerlässlich. Für die Fehleranalyse bzw. Diagnose ist auf eine Rekonstruktion der unverschlüsselten Datenströme meist nicht zu verzichten. Eine Analyse bzw. Diagnose ist häufig in Übertragungsabschnitten mit mehreren gleichzeitig nach dem RTP- Protokoll übertragenen Datenströmen durchzuführen, wobei die Schlüsselinformation in den Datenströmen, beispielsweise RTP- Datenströmen, nicht verfügbar ist und auch nicht während der Verbindungssignalisierung ermittelt werden kann, da die Signalisierungsinformation und verschlüsselt und die Schlüsselinformation nochmals verschlüsselt sind und die verwendeten Schlüsselinformationen nicht verfügbar sind.

Die der Erfindung zugrunde liegende Aufgabe besteht darin, die die Analyse bzw. Diagnose von einzelnen oder gleichzeitig übertragenen, Datenpakete aufweisenden Datenströmen zu verbessern, wobei ein Datenstrom nach einem Netzwerkprotokoll zur Übertragung von Datenströmen datenstromindividuell gebildet und datenstromindividuell verschlüsselt ist. Die Aufgabe wird durch die Merkmale von Anspruch 1 und 8 gelöst.

Der wesentliche Aspekt des erfindungsgemäßen Verfahrens ist darin zu sehen, dass in den jeweils gebildeten Datenstrom als Schlüsseldatenpaket gebildete Datenpakete eingefügt werden, mit dem die datenstromindividuelle Schlüsselinformation für den jeweiligen Datenstrom übertragen wird. Für eine Analyse wird zumindest ein Schlüsseldatenpaket in dem Datenstrom gesucht und die datenstromindividuelle Schlüsselinformation ermittelt und mit Hilfe der ermittelten datenstromindividuellen Schlüsselinformationen wird der zugehörige Datenstrom entschlüsselt.

Ein wesentlicher Vorteil der Erfindung ist darin zu sehen, dass das Bilden und Einfügen von Schlüsselinformation mit geringem administrativem Aufwand erfolgen kann und der Aufwand für die Analyse bzw. Diagnose der gleichzeitig übertragenen Datenströme erheblich reduziert wird. Vorteilhaft kann das Einfügen von Schlüsseldatenpaketen nur dann aktiviert bzw. veranlasst werden, wenn die Diagnose bzw. Analyse der Datenströme aktuell durchgeführt wird.

Gemäß einer Ausgestaltung der Erfindung wird im Netzwerkprotokoll für die Schlüsseldatenpakete ein Datenpakettyp derart bestimmt, dass bei einem Netzwerkprotokoll- gemäßen Empfang des Datenstroms die Schlüsseldatenpakete verworfen werden. Hierdurch ist sichergestellt, dass die Schlüsselinformation bei Netzwerkprotokoll- gemäßen Übertragung der Datenpakete durch einen Netzwerkprotokoll- gemäßen Datenempfänger nicht gelesen werden können. Alternativ wird als Datenpakettyp für die Schlüsseldatenpakete ein für das Netzwerkprotokoll neuer Datenpakettyp definiert oder es ist ein nicht benutzter Datenpakettyp vorgesehen, der bei Netzwerkprotokoll- gemäßer Übertragung der Datenpakete durch einen Netzwerkprotokollgemäßen Empfänger nicht gelesen wird.

Gemäß einer weiteren vorteilhaften Ausgestaltung der Erfindung ist das Schlüsseldatenpaket durch ein Datenpaket repräsentiert, in dessen Kopfteil oder erweiterten Kopfteil die Schlüsselinformation eingefügt ist, wobei die Kopfteilinformation derart gebildet wird, dass bei einem Netzwerkprotokoll- gemäßen Empfang des Datenstroms die Schlüsselinformation verworfen wird.

Weitere vorteilhafte Weiterbildungen des erfindungsgemäßen Verfahrens und eine Ausgestaltung einer erfindungsgemäßen Analyseeinheit sind weiteren Ansprüchen zu entnehmen.

Im Folgenden werden die Erfindung und deren Weiterbildungen anhand zweier zeichnerischen Darstellungen näher erläutert. Dabei zeigen
- Figur 1: in einem Blockschaltbild eine Kommunikationsanordnung für die Durchführung des erfindungsgemäßen Verfahrens und
- Figur 2: ein für die Kommunikationsanordnung vorgesehenes, erfindungsgemäßes Schlüsseldatenpaket.

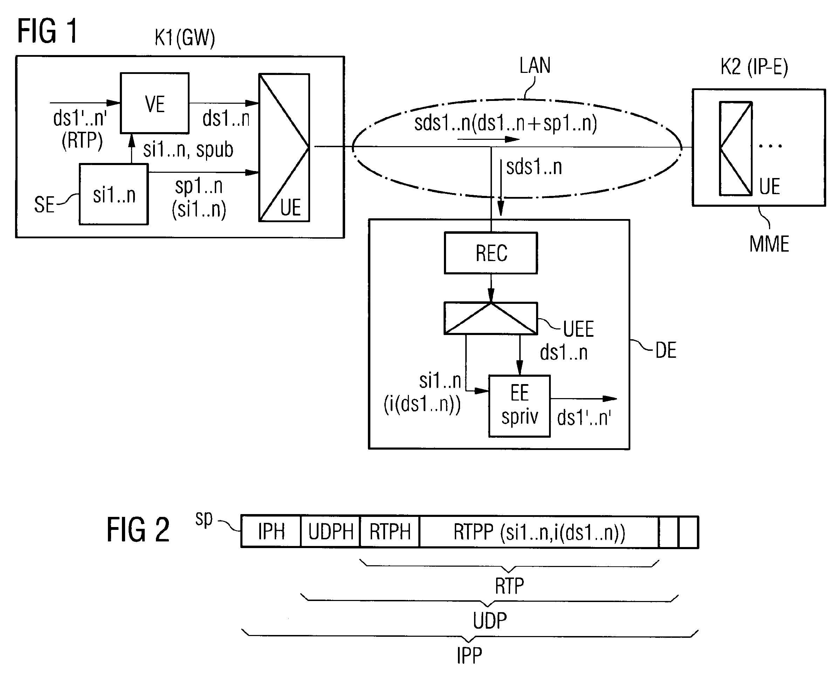

Figur 1 zeigt in einem Blockschaltbild beispielhaft eine Kommunikationsanordnung, in der das erfindungsgemäße Verfahren realisiert ist, wobei nur diejenigen Komponenten dargestellt sind, in denen das erfindungsgemäße Verfahren implementiert ist bzw. die für die Erläuterung des erfindungsgemäßen Verfahrens erforderlich sind.

Die Kommunikationsanordnung ist für Voice over IP, d.h. für die Übertragung von Sprachinformation im IP- Protokoll vorgesehen, wobei die Signalisierung mit den standardisierten H.323 oder SIP- Protokoll durchgeführt wird. Für die Sprach-und/oder Videoübertragung wird vorzugsweise das RTP- Protokoll (Real Time Protocol) eingesetzt, wobei die Sprach-und/oder Videoinformation direkt zwischen den durch die Signalisierung verbundenen Komponenten übertragen wird. Das RTP-Protokoll ist im RFC Standard 1889 bzw. 3550 definiert und stellt ein Protokoll für die kontinuierliche Übertragung von Echtzeitdaten, z.B. audiovisuellen bzw. Multimediadaten über IP- basierte Netwerke dar. Hierbei werden zu übertragende Datenpakete kodiert und für eine Übertragung über IPbasierte Netzwerke in Datenpakete eingefügt, wobei jeweils einer Session zumindest ein Datenstrom ds oder mehrere Datenströme zugeordnet sind. Das RTP- Protokoll RTP ist sowohl für Übertragung einzelner Datenströme ds als auch für die gleichzeitige Übertragung mehrerer Datenströme ds1..n bzw. Datenpakete vorgesehen. Für das Ausführungsbeispiel sei angenommen, dass gleichzeitig mehrere Datenströme ds1..n, d.h. Multimediaströme zwischen Komponenten eines IP- basierten Netzwerks übertragen werden.

Aufgrund gestiegener Sicherheitsanforderungen bei der Übertragung von Datenströmen ds werden in zunehmendem Maße die Datenströme ds, vorzugsweise gemäß dem RTP- Protokoll RTP übertragenen Datenströme ds, verschlüsselt. Hierzu wird für die Verschlüsselung eine Schlüsselinformation si verwendet, die den Komponenten, zwischen denen die Datenströme in einem IP- basierten Netzwerks übertragen werden, bekannt sind. Ein Protokoll zur Verschlüsselung von RTP- Datenströmen ist im SRTP- Protokoll (Secured Real Time Protocoll) gemäß dem RFC Standard 3711 definiert. Hierbei wird ein symmetrisches Kryptosystem verwendet, das ein hohes Maß an Sicherheit bietet.

Die Kommunikationsanordnung umfasst eine erste Komponente K1, die im Ausführungsbeispiel durch ein Gateway GW repräsentiert ist. Das Gateway GW ist beispielhaft über ein lokales Netzwerk LAN - im Weiteren mit LAN bezeichnet und in Figur 1 durch ein strichpunktiertes Oval angedeutet - mit einer zweiten Komponente K2 verbunden, wobei diese im Ausführungsbeispiel durch einen Internet- Endpoint IP-E beispielsweise ein Multimedia-Endgerät MME repräsentiert ist. Das LAN ist beispielsweise physikalisch und prozedural durch ein Ethernet realisiert.

Für das Ausführungsbeispiel sei weiterhin angenommen, dass vom Gateway GW an den Internet-Endpoint IP-E gleichzeitig mehrere, nach dem RTP- Protokoll RTP gebildete Datenströme ds1'..n' bzw. Multimedia-Datenströme zu übermitteln sind. Beispielsweise werden die mehreren Datenströme ds1'..n' durch Audiodatenströme und Videodatenströme gebildet, wobei ein Audio- und ein Videodatenstrom jeweils einer Session zugeordnet sein kann. Zusätzlich werden die nach dem RTP- Protokoll RTP gebildeten Datenströme ds1'..n' mit Hilfe einer Verschlüsselungseinheit VE datenstromindividuell verschlüsselt. Dies bedeutet, dass für jeden Datenstrom ds1'..n' eine unterschiedliche Schlüsselinformation si1..n für die Verschlüsselung vorgesehen ist. Die Verschlüsselung wird bei RTP- Datenströmen ds vorzugsweise mit Hilfe des SRTP- Protokolls SRTP gemäß dem RFC Standard 3711 durchgeführt.

Erfindungsgemäß sollen aus den datenstromindividuell verschlüsselten Datenströmen ds1..n für eine Analyse der Datenströme durch eine Diagnoseeinheit DE die verschlüsselten Datenströme ds1..n wieder entschlüsselt werden. Üblicherweise ist eine Diagnoseeinheit DE an der Signalisierung zwischen den eine Verbindung aufbauenden Komponenten eines IP- basierten Netzwerks nicht beteiligt, wobei im Rahmen der Signalisierung die verwendete Schlüsselinformation si für den jeweiligen Datenstrom ds ausgehandelt wird. Zwar könnte die Signalisierung durch die Diagnoseeinheit DE ebenfalls analysiert werden, jedoch könnten die Schlüsselinformation si1..n für die Datenströme ds1..n nicht ermittelt werden, da die Signalisierung verschlüsselt und die Schlüsselinformationen si1..n nochmals verschlüsselt sind und die Schlüsselinformationen für diese Verschlüsselungen in der Diagnoseeinheit nicht verfügbar sind und auch nicht aus der Signalisierungsinformation ermittelt werden können. Dies bedeutet, dass die Diagnoseeinheit DE keine Information über die in den Datenströmen ds1..n verwendeten Schlüsselinformationen si besitzt.

Um eine Entschlüsselung der nach dem SRTP- Protokoll gebildeten Datenströme ds1..n trotzdem zu ermöglichen, wird das erfindungsgemäße Verfahren eingesetzt, wobei das erfindungsgemäße Verfahren beim Ausführungsbeispiel auf die gleichzeitige Übertragung mehrerer nach dem SRTP- Protokoll gebildeter Datenströme sds1..n von dem Gateway GW zum IP- Endpoint IP-E bezogen ist. Bei entgegen gesetzter Übertragungsrichtung sind die nachstehend beschriebenen Verfahren und Komponenten entsprechend zu realisieren.

Im Gateway GW werden die Datenströme ds1'..n' in einer Verschlüsselungseinheit VE gemäß dem SRTP- Protokoll SRTP verschlüsselt. Die erforderlichen Schlüsselinformationen si1..n sind in einer Schlüsseleinheit SE gespeichert und werden der Schlüsseleinheit SE zur Verfügung gestellt - in Figur 1 durch eine mit si1..n bezeichneten Pfeil angedeutet. Hierbei ist für jeden Datenstrom ds1'..n' eine Schlüsselinformation si1..n vorgesehen, d.h. die Datenströme ds1'..n' werden datenstromindividuell verschlüsselt.

In der Schlüsseleinheit SE werden zusätzlich für jeden Datenstrom ds1..n Schlüsseldatenpakete sp1..n gebildet, wobei in die Schlüsseldatenpakete sp1..n die Schlüsselinformation si1..n eingefügt wird, die für die Entschlüsselung der datenstromindividuell verschlüsselten Datenströme ds1..n erforderlich ist. Die Schlüsseldatenpakete sp1..n und die verschlüsselten Datenströme ds1..n werden an eine Übertragungseinheit UE übermittelt. In der Übertragungseinheit UE werden die Schlüsseldatenpakete sp1..n datenstromindividuell in die Datenströme ds1..n eingefügt, d.h. in den ersten Datenstrom ds1 werden die ersten Schlüsseldatenpakete sp1, in den zweiten Datenstrom ds2 die zweiten Schlüsseldatenpakete sp2 usw. eingefügt. Vorteilhaft werden die Schlüsseldatenpakete sp1..n jeweils kontinuierlich in die verschlüsselten Datenströme ds1..n eingefügt. Das Einfügen der Schlüsseldatenpakete sp1..n in die Datenströme ds1..n wird üblicherweise durch einen Datenpaketmultiplexer bewerkstelligt - in der Figur 1 durch ein Multiplexerdreieck angedeutet.

Um die Sicherheit bei der Übertragung der Schlüsseldatenpakete sp1..n zu erhöhen, können die Schlüsseldatenpakete (sp1..n) zusätzlich verschlüsselt werden. Hierzu ist eine zusätzliche Schlüsselinformation erforderlich, die durch einen öffenlichen Schlüssel spublic und eine privaten Schlüssel spriv gebildet ist. Hierbei wird der öffenliche Schlüssel spub in der Schlüsseleinheit SE im Gateway GW für die zusätzliche Verschlüsselung bereitgestellt und für die Verschlüsselung der Schlüsseldatenpakete (sp1..n) an die Übertragungseinheit UE übermittelt - in der Figur 1 durch einen mit spub bezeichneten Pfeil dargestellt. In der Diagnoseeinheit DE wird der private Schlüssel spriv durch die Entschlüsselungseinheit EE breitgestellt und für die Entschlüsselung der zusätzlich verschlüsselten Schlüsseldatenpakete (sdp1..n) verwendet - in Figur 1 durch die Bezeichnung spriv in der Entschlüsselungseinheit EE angedeutet.

Die die Schlüsseldatenpakete sp1..n enthaltenen Datenströme sds1..n werden über das LAN an den IP-Endpoint IP-E übertragen. Zum Zecke der Diagnose bzw. der Analyse der Datenströme sds1..n ist die an das LAN angeschlossene Diagnoseeinheit DE vorgesehen. Um die die Schlüsseldatenpakete sp1..n enthaltenen Datenströme sds1..n analysieren zu können, müssen die verschlüsselten Datenströme sds1..n entschlüsselt werden. Hierzu ist wie eingangs bereits erläutert, für jeden verschlüsselten Datenstrom ds1..n die für eine Entschlüsselung erforderliche Schlüsselinformation si1..n nötig. Da erfindungsgemäß die die Schlüsselinformationen si1..n enthaltenden Schlüsseldatenpakete sp1..n in die Datenströme sds1..n eingefügt sind, werden in der Diagnoseeinheit DE mit Hilfe einer Überwachungseinheit UEE die Schlüsseldatenpakete sp1..n in den jeweiligen Datenströmen ds1..n gesucht, gelesen und gespeichert. Vorzugsweise wird nicht das vollständige Schlüsseldatenpaket sp1..n, sondern nur die darin enthaltene Schlüsselinformation si1..n ermittelt und gespeichert. Zusammen mit der jeweiligen Schlüsselinformation si1..n ist auch eine Information i (ds1..n) aus den Schlüsseldatenpaketen sp1..n zu ermitteln und zu speichern, für welchen die Schlüsseldatenpakete sp1..n enthaltenen Datenstrom sds1..n die Schlüsselinformation si1..n zum Entschlüsseln vorgesehen ist. Des Weiteren ist beim Ausführungsbeispiel angenommen, dass mit Hilfe einer in der Überwachungseinrichtung UEE vorgesehenen Demultiplexerfunktion - in Figur 1 durch ein Dreieck dargestellt - die gefundenen Schlüsseldatenpakete sp1..n nach dem Ermitteln und Speichern der Schlüsselinformationen si1..n aus den die Schlüsseldatenpakete sp1..n enthaltenen Datenströmen sds1..n entfernt werden und nur die verschlüsselten Datenströme ds1..n an eine Entschlüsselungseinheit EE übermittelt werden.

Die Schlüsselinformationen si1..n einschließlich der Informationen i(ds1..n) werden ebenfalls an die Entschlüsselungseinheit ESE geführt. In dieser werden mit Hilfe der jeweiligen Schlüsselinformation si1..n, d.h mit der Entschlüsselungsinformation und der Information i(ds1..n) die verschlüsselten Datenströme sds1..n entschlüsselt. Nach der Entschlüsselung stehen die unverschlüsselten Datenströme ds1'..n' für eine Diagnose bzw. Analyse in der Diagnoseeinheit DE bereit.

In der Diagnoseeinheit DE ist vorteilhaft noch eine beispielsweise zwischen LAN und Diagnoseeinheit DE eingefügte Aufzeichnungseinheit REC vorgesehen, in der die die Schlüsseldatenpakete sp1..n enthaltenen Datenströme sds1..n aufgezeichnet werden können. Die Analyse bzw. Diagnose der aufgezeichneten Datenströme sds1..n kann dann zu einem späteren Zeitpunkt durchgeführt werden, beispielsweise bei einer Aufzeichnung in der Nachtzeit und einer späteren Diagnose während des Tages. Die Aufzeichnungseinrichtung REC kann alternativ auch nach der Entschlüsselung der verschlüsselten Datenströme sds1..n eingefügt werden - nicht dargestellt -, wobei die Datenströme ds1'..n unverschlüsselt für die Diagnose bzw. Analyse bereitstehen.

Figur 2 zeigt die Protokollstruktur eines Schlüsseldatenpakets sp, in das eine Schlüsselinformation si eingefügt ist. Das Schlüsseldatenpaket sp ist gemäß dem RTP- Standard RTP gebildet und weist nach RFC 3550 einen Kopfteil RTPH - in der Fachwelt mit Header bezeichnet - und einen Nutzteil RTPP - in der Fachwelt mit Payload bezeichnet - auf. Eingebettet ist das RTP- Protokoll RTP in ein UDP- Protokoll UDP, dessen Header UDPH an den Header RTPH des RTP- Protokoll angefügt ist. Da es sich um eine IP- basierte Übertragung handelt, ist das UDP- Protokoll in einem IP- Protokoll IPP verpackt, wozu ein IP- Header IPH angefügt wird. Bei einer Übertragung über das LAN, insbesondere ein Ethernet LAN ist das entsprechende Protokollelement noch zu berücksichtigen - der Übersichtlichkeit halber nicht dargestellt.

Im Header RTP des RTP- Protokolls stellt die Information über den Payloadtyp PT eine für das erfindungsgemäße Verfahren wesentliche Information dar. Erfindungsgemäß wird ein Payloadtyp PT benutzt, der im RTP- Protokoll RTP zwar angegeben ist, jedoch ist diesem kein Payloadtyp PT zugeordnet, wobei in der Standardisierungsphase ein Payloadtyp PT "19" definiert wurde, dieser später jedoch nicht benutzt wurde und jetzt als "reserviert" angegeben ist. Für die Bestimmung eines RTP- Datenpakets als Schlüsseldatenpaket sp1..n wird daher vorteilhaft der Payloadtyp 19 verwendet.

Der Payloadtyp PT ist im standardierten RTP- Header RTPH gemäß nachstehender Tabelle 1 positioniert, wobei die Nummerierung 0..9 jeweils ein Byte repräsentiert.

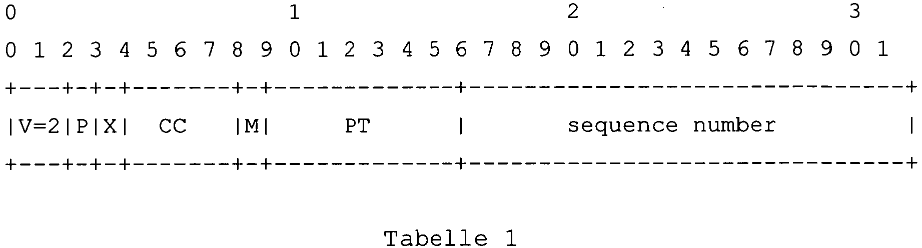

In den Nutzteil RTPP eines Schlüsseldatenpakets sp ist die Schlüsselinformation si1..n für den jeweiligen Datenstrom ds1..n eingefügt, wobei in nachstehender Tabelle 2 die für eine Entschlüsselung gemäß dem standardierten SRTP- Protokoll SRTP verwendete Schlüsselinformation si dargestellt ist, wobei die Nummerierung 0..9 jeweils ein Byte repräsentiert.

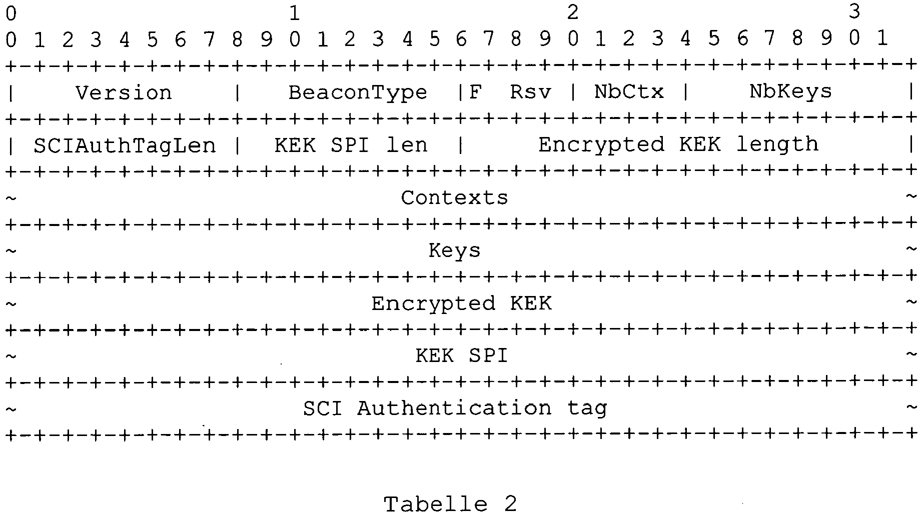

Hierbei ist den in Tabelle 2 vorhandenen Angaben standardgemäß folgende Bedeutung zugeordnet.
Version:
   Version of the tracebeacon.
BeaconType:
   Content of the tracebeacon.
F:
   Indicate if the lengths of the variable fields is fixed to their maximum values (the lengths are fixed if F==1).
Rsv:
   Reserved bits.
NbCtx:
   Indicates the number of contexts contained in the packet. A context is an association between a direction (Tx/Rx) and an SSRC. It has been judged that a maximum of 15 contexts should suffice for the current purposes.
NbKeys:
   Indicates the number of keys contained in the packet.
SCIAuthTagLen:
   The length of the authentication tag appended to the tracebeacon. This length will always be zero for now as the authentication is not expected to be used in the short-term.
KEK SPI Len:
   Length in bytes of the SPI needed to retrieve the key that encrypted the KEK. This length can be zero if the Encrypted KEK is not present in the tracebeacon.
Encrypted KEK length:
   Length of the symmetric key encrypted using RSA, in bytes. This length can be zero if the tracebeacon does not contain this key. Since the Encrypted KEK can be the longest part of the tracebeacon, sending the Encrypted KEK in, say, one tracebeacon out of two can result in appreciable gains in the average size of the tracebeacons sent.
Contexts:
   Configuration information for the contexts (see the next diagrams).
Keys:
   Configuration information for the keys (see the next diagrams).
Encrypted KEK:
   Symmetric key encrypted using RSA. This field can take up to 256 bytes when the public key has 2048 bits and does not need to end on a 32 bits boundary. This field is also optional as it can have a length of zero
KEK SPI:
   Identifier that allows to retrieve the key needed to decrypt the KEK. In your case this field corresponds to a Certificate Id. This field does not need to end on a 32 bits boundary. Like the Encrypted KEK this field is optional, as it can have a length of zero.
SCI Authentication tag:
   The authentication tag of the tracebeacon. The authenticated portion of the tracebeacon will be the first eight bytes, the contexts and keys sections. This field is optional, as the authentication tag length can be zero. It is indeed not expected to be present for this version of the tracebeacon.

Mit Hilfe der vorhergehend beschriebenen Schlüsselinformationen si1..n gemäß dem standardisierten SRTP- Protokoll SRTP werden die verschlüsselten Datenströme ds1..n entschlüsselt, d.h. in die ursprünglichen Datenströme ds1'..n' umgesetzt. Die Datenströme ds1'..n' können in der Diagnoseeinheit DE entsprechend den implementierten Diagnoseroutinen - nicht dargestellt - bearbeitet werden.

## Patentansprüche

1. Verfahren zur Übertragung und zur Analyse von zumindest einem verschlüsselte Datenpakete aufweisenden Datenstrom, wobei der Datenstrom von einem Sender nach einem Netzwerkprotokoll zum Verschlüsseln und Übertragen von Datenströmen datenstromindividuell gebildet und datenstromindividuell verschlüsselt ist und im Netzwerkprotokoll für die Schlüsseldatenpakete eine Information über einen Datenpakettyp angegeben wird, wobei
a) durch den Sender in den jeweils gebildeten, verschlüsselten Datenstrom als Schlüsseldatenpakete gebildete Datenpakete eingefügt werden, mit dem die datenstromindividuelle Schlüsselinformation für den jeweiligen Datenstrom über ein Netzwerk an einen netzwerkprotokollgemäßen Datenempfänger übertragen wird,
b) in einer an das Netzwerk angeschlossenen Überwachungseinheit der Datenstrom empfangen wird und zumindest ein Schlüsseldatenpaket in dem jeweiligen, Schlüsseldatenpakete aufweisenden Datenstrom gesucht und die datenstromindividuelle Schlüsselinformation ermittelt wird und an eine Entschlüsselungseinheit übermittelt wird,
c) mit Hilfe der datenstromindividuellen Schlüsselinformation der zugehörige, verschlüsselte Datenstrom durch die Entschlüsselungseinheit zwecks Diagnose bvzw. Analyse des Datenstroms entschlüsselt wird, wobei
entweder im Netzwerkprotokoll für die Schlüsseldatenpakete der Datenpakettyp derart definiert oder vorgesehen wird, dass bei einem netzwerkprotokollgemäßen Empfang des Datenstroms die Schlüsseldatenpakete durch den netzwerkprotokollgemäßen Datenempfänger verworfen werden, oder
das Schlüsseldatenpaket durch ein Datenpaket repräsentiert ist, in dessen Kopfteil oder erweiterten Kopfteil die Schlüsselinformation eingefügt ist, wobei die Kopfteilinformation derart gebildet wird, dass bei einem Netzwerkprotokoll- gemäßen Empfang des Datenstroms die Schlüsselinformation durch den netzwerkprotokollgemäßen Datenempfänger verworfen wird, wobei
durch das Verwerfen der Schlüsseldatenpakete oder der Schlüsselinformation sichergestellt wird, dass die Schlüsselinformation durch den netzwerkprotokollgemäßen Datenempfänger nicht gelesen werden kann.

2. Verfahren nach Anspruch 1, **dadurch gekennzeichnet,**
**dass** als Datenpakettyp für die Schlüsseldatenpakete ein für das Netzwerkprotokoll neuer Datenpakettyp definiert oder ein nicht benutzter Datenpakettyp vorgesehen ist.

3. Verfahren nach einem der vorhergehenden Ansprüche, **dadurch gekennzeichnet,**
**dass** Schlüsseldatenpakete jeweils kontinuierlich in den Datenstrom derart eingefügt werden, dass mehrere Schlüsseldatenpakete datenstromindividuell in den Datenstrom eingefügt werden.

4. Verfahren nach einem der vorhergehenden Ansprüche, **dadurch gekennzeichnet,**
**dass** das zumindest eine Schlüsseldatenpaket zusätzlich verschlüsselt wird, wobei die zusätzliche Schlüsselinformation der Analyse bereitgestellt wird.

5. Verfahren nach einem der vorhergehenden Ansprüche, **dadurch gekennzeichnet,**
**dass** die Schlüsselinformation durch eine asymmetrische Schlüsselinformation repräsentiert ist, wobei für die Verschlüsselung der Schlüsseldatenpakete eine zum Entschlüsseln des Datenstroms unterschiedliche Schlüsselinformation vorgesehen ist.

6. Verfahren nach einem der vorhergehenden Ansprüche, **dadurch gekennzeichnet,**
**dass** das Netzwerkprotokoll durch das Secured Real Time Protocol repräsentiert ist.

7. Verfahren nach einem der vorhergehenden Ansprüche, **dadurch gekennzeichnet,**
**dass** das Einfügen von Schlüsseldatenpaketen für eine Analyse und/oder Aufzeichnung der Datenströme aktivierbar und anschließend deaktivierbar ist.

8. Kommunikationsanordnung zur Übertragung und zur Analyse von zumindest einem verschlüsselte Datenpakete aufweisenden Datenstrom, wobei ein Datenstrom nach einem Netzwerkprotokoll zum Verschlüsseln und Übertragen von Datenströmen datenstromindividuell gebildet und datenstromindividuell verschlüsselt ist und im Netzwerkprotokoll für die Schlüsseldatenpakete eine Information über einen Datenpakettyp angegeben ist,
bestehend aus
a) einer Schlüsseleinheit, die so ausgebildet ist, dass sie Schlüsseldatenpakete für den jeweiligen Datenstrom bildet, wobei in den Schlüsseldatenpaketen jeweils die datenstromindividuellen Schlüsselinformation für den jeweiligen Datenstrom enthalten ist,
b) einer Übertragungseinheit, die so ausgebildet ist, dass sie die von der Schlüsseleinheit gebildeten Schlüsseldatenpakete in den jeweils gebildeten Datenstrom einfügt, mit dem die datenstromindividuelle Schlüsselinformation für den jeweiligen Datenstrom über ein Netzwerk an einen netzwerkprotokollgemäßen Datenempfänger übertragen wird, und
wobei entweder im Netzwerkprotokoll für die Schlüsseldatenpakete der Datenpakettyp derart definiert oder vorgesehen ist, dass bei einem Netzwerkprotokollgemäßen Empfang des Datenstroms die Schlüsseldatenpakete durch den netzwerkprotokollgemäßen Datenempfänger verworfen werden, oder
das Schlüsseldatenpaket durch ein Datenpaket repräsentiert ist, in dessen Kopfteil oder erweiterten Kopfteil die Schlüsselinformation eingefügt ist, wobei die Kopfteilinformation derart gebildet ist, dass bei einem Netzwerkprotokoll- gemäßen Empfang des Datenstroms die Schlüsselinformation v durch den netzwerkprotokollgemäßen Datenempfänger verworfen wird, wobei
durch das Verwerfen der Schlüsseldatenpakete oder der Schlüsselinformation sichergestellt ist, dass die Schlüsselinformation durch den Netzwerkprotokoll- gemäßen Datenempfänger nicht gelesen werden kann,
c) eine an das Netzwerk angeschlossene Überwachungseinheit, die so ausgebildet ist, dass zumindest ein Schlüsseldatenpaket in dem jeweiligen Datenstrom suchbar ist und die datenstromindividuelle Schlüsselinformation ermittelt, und
d) einer an die Überwachungseinheit angeschlossene Entschlüsselungseinheit, die so ausgebildet ist, dass sie den jeweiligen, Schlüsseldatenpakete aufweisenden Datenstrom mit Hilfe der zugehörigen datenstromindividuellen Schlüsselinformationen zwecks Analyse bzw. Diagnose des Datenstroms entschlüsselt.

9. Kommunikationsanordnung nach Anspruch 8, **dadurch gekennzeichnet,**
**dass** die Überwachungseinheit und die Entschlüsselungseinheit in eine Diagnoseeinheit, die so ausgebildet ist, dass die entschlüsselten Datenströme analysierbar sind, integriert sind.

10. Kommunikationsanordnung nach Anspruch 8 oder 9, **dadurch gekennzeichnet,**
**dass** eine Aufzeichnungseinrichtung für das Aufzeichnen der die Schlüsseldatenpakete enthaltenden Datenströme und/oder für das Aufzeichnen der verschlüsselten Datenströme und/oder für das Aufzeichnen der entschlüsselten Datenströme vorgesehen ist.

11. Kommunikationsanordnung nach einem der Ansprüche 8 bis 10, **dadurch gekennzeichnet,**
**dass** die Schlüsseleinheit derart ausgestaltet ist, dass das Einfügen von Schlüsseldatenpaketen in die verschlüsselten Datenströme für eine Analyse und/oder Aufzeichnung der Datenströme aktivierbar und deaktivierbar ist.

## Claims

1. A method for transmitting and analyzing at least one data stream comprising encrypted data packets, wherein the data stream is formed data stream-individually and encrypted data stream-individually by a transmitter according to a network protocol for encrypting and transmitting data streams, and information on the type of data packet is indicated in the network protocol for the key data packets, wherein
a) the transmitter inserts data packets formed as key data packets into each formed and encrypted data stream, by means of which the data stream-individual key information for the respective data stream is transmitted to a data receiver corresponding to the network protocol via a network,
b) in a monitoring unit which is connected to the network, the data stream is received and at least one key data packet in the respective data stream comprising key data packets is searched, and the data stream-individual key information is determined and transmitted to a decryption unit,
c) using the data stream-individual key information, the associated encrypted data stream is decrypted by the decryption unit for diagnosis and/or analysis of the data stream, wherein either the type of data packet is defined or provided in the network protocol for the key data packets such that the key data packets are discarded by the data receiver corresponding to the network protocol if the data stream is received according to the network protocol
or
the key data packet is represented by a data packet which has the key information inserted into its header or extended header, the header information being formed such that the key information is discarded by the data receiver corresponding to the network protocol if the data stream is received according to the network protocol, wherein,
by discarding the key data packets or the key information, it is ensured that the key information cannot be read by the data receiver corresponding to the network protocol.

2. The method of claim 1, **characterised in that** a type of data packet which is new to the network protocol is defined or an unused type of data packet is provided as the type of data packet for the key data packets.

3. The method of any preceding claim, **characterised in that** the key data packets are inserted continuously into the data stream in each case such that several key data packets are inserted data stream-individually into the data stream.

4. The method of any preceding claim, **characterised in that** the at least one key data packet is additionally encrypted, wherein the additional key information is provided for analysis.

5. The method of any preceding claim, **characterised in that** the key information is represented by asymmetrical key information, wherein key information which is different from the decryption of the data stream is provided for the encryption of the key data packets.

6. The method of any preceding claim, **characterised in that** the network protocol is represented by the Secured Real Time Protocol.

7. The method of any preceding claim, **characterised in that** the insertion of key data packets for the analysis and/or recording of the data streams can be activated, and subsequently deactivated.

8. A communication assembly for transmitting and analyzing at least one data stream comprising encoded data packets, wherein a data stream is formed data stream-individually and encoded data stream-individually according to a network protocol for encrypting and transmitting data streams, and information about a type of data packet is indicated in the network protocol for the key data packets,
said communication assembly consisting of
a) a key unit which is designed such that it forms key data packets for the respective data stream, wherein each of the key data packets contains the data stream-individual key information for the respective data stream,
b) a transmitting unit which is designed such that it inserts the key data packets formed by the key unit into the respectively formed data stream, by means of which the data stream-individual key information for the respective data stream is transmitted to a data receiver corresponding to the network protocol via a network, and
wherein either the type of data packet is defined or provided in the network protocol for the key data packets such that the key data packets are discarded by the data receiver corresponding to the network protocol if the data stream is received according to the network protocol, or
the key data packet is represented by a data packet which has the key information inserted into its header or extended header, the header information being formed such that the key information is discarded by the data receiver corresponding to the network protocol if the data stream is received according to the network protocol, wherein,
by discarding the key data packets or the key information, it is ensured that the key information cannot be read by the data receiver corresponding to the network protocol,
c) a monitoring unit connected to the network, which is designed such that at least one key data packet is searchable in the respective data stream and determines the data stream-individual key information, and
d) a decryption unit connected to the monitoring unit, which is designed such that it decrypts the respective data stream comprising key data packets using the associated data stream-individual key information for analysis and/or diagnosis of the data stream.

9. The communication assembly of claim 8, **characterised in that** the monitoring unit and the decryption unit are integrated into a diagnosis unit, which is designed such that the decrypted data streams are analyzable.

10. The communication assembly of claim 8 or 9, **characterised in that** a recording means is provided for recording the data streams comprising the key data packets and/or for recording the encrypted data streams and/or for recording the decrypted data streams.

11. The communication assembly of claims 8 to 10, **characterised in**
**that** the key unit is designed such that the insertion of key data packets into the encrypted data streams for the analysis and/or recording of the data streams can be activated and deactivated.

## Revendications

1. Procédé de transmission et d'analyse d'au moins un flux de données présentant des paquets de données codés, dans lequel le flux de données d'un émetteur est formé individuellement par flux de données selon un protocole réseau de codage et de transmission de flux de données et est codé individuellement par flux de données, et des informations sur un type de paquet de données sont fournies dans le protocole réseau pour les paquets de données de codage, dans lequel
a) des paquets de données sous forme de paquets de données de codage sont insérés par l'émetteur dans le flux de données codé, respectivement formé, grâce auquel les informations de codage associées individuellement à chaque flux de données sont transmises pour le flux de données respectif via un réseau à un destinataire des données selon le protocole réseau,
b) le flux de données est reçu par une unité de surveillance connectée au réseau et au moins un paquet de données de codage est recherché dans le flux de données respectif, présentant des paquets de données de codage, et les informations de codage associées individuellement à chaque flux de données sont déterminées et transmises à une unité de décodage,
c) le flux de données codé correspondant est décodé par l'unité de décodage à l'aide des informations de codage associées individuellement à chaque flux de données à des fins de diagnostic ou d'analyse du flux de données, dans lequel
soit le type de paquet de données est défini ou prévu pour les paquets de données de codage dans le protocole réseau, de telle sorte que les paquets de données de codage sont rejetés par le destinataire des données selon le protocole réseau lors d'une réception du flux de données selon le protocole réseau, soit
le paquet de données de codage est représenté par un paquet de données dans l'en-tête ou l'en-tête étendu duquel les informations de codage sont insérées, dans lequel les informations d'en-tête sont formées de telle sorte que les informations de codage sont rejetées par le destinataire des données selon le protocole réseau lors d'une réception du flux de données selon le protocole réseau, dans lequel
le rejet des paquets de données de codage ou des informations de codage permet de garantir que les informations de codage ne peuvent pas être lues par le destinataire des données selon le protocole réseau.

2. Procédé selon la revendication 1, **caractérisé en ce qu'**un nouveau type de paquet de données pour le protocole réseau est défini comme type de paquet de données pour les paquets de données de codage ou qu'un type de paquet de données non utilisé est prévu.

3. Procédé selon l'une quelconque des revendications précédentes, **caractérisé en ce que**
des paquets de données de codage sont insérés respectivement en continu dans le flux de données, de telle sorte que plusieurs paquets de données de codage sont insérés individuellement par flux de données dans le flux de données.

4. Procédé selon l'une quelconque des revendications précédentes, **caractérisé en ce que**
l'au moins un paquet de données de codage est codé en plus, dans lequel les informations de codage supplémentaires sont mises à disposition pour l'analyse.

5. Procédé selon l'une quelconque des revendications précédentes, **caractérisé en ce que**
les informations de codage sont représentées par des informations de codage asymétriques, dans lequel des informations de codage différentes sont prévues pour le codage des paquets de données de codage et pour le décodage du flux de données.

6. Procédé selon l'une quelconque des revendications précédentes, **caractérisé en ce que**
le protocole réseau est représenté par le Secured Real Time Protocol.

7. Procédé selon l'une quelconque des revendications précédentes, **caractérisé en ce que**
l'insertion de paquets de données de codage pour une analyse et/ou un enregistrement des flux de données est activable puis désactivable.

8. Dispositif de communication pour la transmission et l'analyse d'au moins un flux de données présentant des paquets de données codés, dans lequel un flux de données est formé individuellement par flux de données selon un protocole réseau de codage et de transmission de flux de données et est codé individuellement par flux de données, et des informations sur un type de paquet de données sont fournies dans le protocole réseau pour les paquets de données de codage,
constitué
a) d'une unité de codage, qui est conçue pour former des paquets de données de codage pour le flux de données respectif, dans lequel les informations de codage associées individuellement à chaque flux de données sont respectivement comprises dans les paquets de données de codage pour le flux de données respectif,
b) d'une unité de transmission, qui est conçue pour insérer les paquets de données de codage formés par l'unité de codage dans le flux de données respectivement formé, grâce auquel les informations de codage associées individuellement à chaque flux de données sont transmises pour le flux de données respectif via un réseau à un destinataire des données selon le protocole réseau, et dans lequel soit le type de paquet de données est défini ou prévu pour les paquets de données de codage dans le protocole réseau, de telle sorte que les paquets de données de codage sont rejetés par le destinataire des données selon le protocole réseau lors d'une réception du flux de données selon le protocole réseau, soit le paquet de données de codage est représenté par un paquet de données dans l'en-tête ou l'en-tête étendu duquel les informations de codage sont insérées, dans lequel les informations d'en-tête sont formées de telle sorte que les informations de codage sont rejetées par le destinataire des données selon le protocole réseau lors d'une réception du flux de données selon le protocole réseau, dans lequel
le rejet des paquets de données de codage ou des informations de codage permet de garantir que les informations de codage ne peuvent pas être lues par le destinataire des données selon le protocole réseau,
c) d'une unité de surveillance connectée au réseau, qui est conçue pour qu'au moins un paquet de données de codage puisse être recherché dans le flux de données respectif et que les informations de codage associées individuellement à chaque flux de données soient déterminées, et
d) d'une unité de décodage connectée à l'unité de surveillance, qui est conçue pour décoder le flux de données respectif, présentant des paquets de données de codage à l'aide des informations de codage correspondantes, associées individuellement à chaque flux de données à des fins d'analyse ou de diagnostic du flux de données.

9. Dispositif de communication selon la revendication 8, **caractérisé en ce que**
l'unité de surveillance et l'unité de décodage sont intégrées dans une unité de diagnostic, qui est conçue pour que les flux de données décodés puissent être analysés.

10. Dispositif de communication selon la revendication 8 ou 9, **caractérisé en ce**
**qu'**un système d'enregistrement est prévu pour l'enregistrement des flux de données comprenant les paquets de données de codage et/ou pour l'enregistrement des flux de données codés et/ou pour l'enregistrement des flux de données décodés.

11. Dispositif de communication selon l'une quelconque des revendications 8 à 10, **caractérisé en ce que** l'unité de codage est conçue pour que l'insertion de paquets de données de codage dans les flux de données codés pour une analyse et/ou un enregistrement des flux de données soit activable et désactivable.
